# EUROPÄISCHE PATENTSCHRIFT

(11) **EP 0 628 063 B1**
(45) Veröffentlichungstag und Bekanntmachung des Hinweises auf die Patenterteilung: **01.05.1996**
(21) Anmeldenummer: 93903709.9
(22) Anmeldetag: 24.02.1993
(51) Int. Cl.: C08J 5/18, C08L 51/04, B65D 77/20

(54) **ABLÖSBARE HEISSIEGELFÄHIGE FOLIE**
DETACHABLE HEAT-SEALING PLASTIC SHEET
FEUILLE THERMOSOUDABLE DETACHABLE

(30) Priorität: 24.02.1992 AT 345/92
(43) Veröffentlichungstag der Anmeldung: 14.12.1994
(73) Patentinhaber: KLEPSCH, Liliana, A-1190 Wien (AT)
(72) Erfinder: KLEPSCH, Liliana, A-1190 Wien (AT)
(74) Vertreter: Brauneiss, Leo, Dipl.Ing.
(86) Internationale Anmeldenummer: AT9300031
(87) Internationale Veröffentlichungsnummer: WO9317068

(56) Entgegenhaltungen:
- EP-A- 0 251 636
- EP-A- 0 318 794
- EP-A- 0 406 681
- FR-A- 2 247 397
- FR-A- 2 263 277
- US-A- 4 588 099
- DATABASE WPIL Week 0681, Derwent Publications Ltd., London, GB; AN 81-08597D & JP-A-55 154 202

## Beschreibung

Kunststoffbehälter, in welchen sich Lebensmittel befinden, müssen in der Regel luftdicht verschlossen werden, um die Haltbarkeit der Lebensmittel zu gewährleisten. Auch andere Artikel werden häufig in Kunststoffbehältern angeboten, die durch eine Folie verschlossen sind.

Beispielsweise bei in Bechern aus Kunststoff befindlichen Molkereiprodukten wie Rahm, Obers, Joghurt od.dgl., ist es seit langem bekannt, den Becher durch eine Aluminiumfolie zu verschließen, die über einen Heißsiegellack mit dem Becherrand verbunden wird. Nachteilig ist hiebei der für die Herstellung des Aluminiums erforderliche hohe Energieaufwand.

Man hat auch bereits vorgeschlagen, solche Behälter mit Kunststoffolien, beispielsweise Polyesterfolien oder Hart-PVC-Folien, abzuschließen, die gleichfalls mittels eines Heißsiegellackes mit dem Behälterrand verbunden werden. Auch die Verwendung derartiger Folien ist infolge des notwendigen Heißsiegellackes teuer. Derselbe Nachteil tritt auch bei Anwendung von Papier-Polyesterlaminaten als Abschluß auf, welche gleichfalls mittels eines Heißsiegellackes mit dem Behälterrand verbunden werden. Außerdem sind die von der Siegelschicht herrührenden Restlösungsmittel aus dem Kunststoff nur mit erheblichem Aufwand zu entfernen.

In der Molkereiwirtschaft bestehen die Behälter in der Regel aus Polystyrol oder aus Polypropylen. Die beschriebenen Folien bestehen dann aus einem artfremden Material. Neuerdings wird nun in zahlreichen Ländern angestrebt, die gebrauchten Behälter zu sammeln und wiederzuverwerten. Eine derartige Wiederverwertung ist aber dann, wenn die Abschlußfolie aus einem artfremden Material besteht, entweder sehr kostenintensiv oder überhaupt nicht möglich, da die Abschlußfolie in der Regel am Behälterrand haften bleibt und es dem Konsumenten nicht zuzumuten ist, diese Abschlußfolie vor dem Sammeln der Behälter vollständig zu entfernen.

Es wurde daher bereits vorgeschlagen, eine Abschlußfolie aus Polystyrol herzustellen, so daß Behälter und Abschlußfolie aus einer artgleichen Stoffgruppe bestehen und somit gemeinsam einer Wiederverwertung zugeführt werden können, so daß ein Trennen der Abschlußfolie vom Behälter nicht erforderlich ist. An derartige heißsiegelfähige, also ohne Verwendung eines Heißsiegellackes mit dem Behälterrand verbindbare Folien wird jedoch die Anforderung gestellt, daß einerseits mit einer solchen Siegeltemperatur gearbeitet wird, daß ein Anhaften der Folie am Siegelwerkzeug vermieden wird, andererseits eine hinreichende Verbindung zwischen der Folie und dem Behälterrand gewährleistet ist und trotzdem die Folie für das Öffnen des Behälters leicht vom Behälterrand abgezogen werden kann.

Aus der DE-OS 39 21 677 ist bereits eine siegelfähige Kunststoffolie bekannt geworden, die aus zumindest zwei, vorzugsweise drei, Schichten besteht, und zwar aus einer heißsiegelfähigen Polystyrolschicht, einer Hauptschicht aus hochschlagfestem Polystyrol und gegebenenfalls aus einer Hitzeschutzschicht aus einem wesentlich hitzebeständigerem Kunststoff als Polystyrol, beispielsweise PBT. Diese Hitzeschutzschicht dient dazu, ein Ankleben der Folie am Siegelwerkzeug und das Wegfliessen der darunterliegenden Polystyrolschichten unter dem Druck und der Temperatur des Siegelwerkzeuges zu vermeiden.

Nachteilig ist es, daß derartige Mehrschichtfolien nach dem Koextrusionsverfahren relativ aufwendig herzustellen sind und insbesondere bei geringen Foliendicken von beispielsweise 0,12 mm beim Abziehen der Folie zum Delaminieren neigen.

Die FR-A-2 247 397 beschreibt heißsiegelfähige, biaxial orientierte Folien aus schlagfestem Polystyrol als Verschlußmaterial für Kunststoffbehälter. Die Verschlußfolie, die rückstandsfrei vom Behälter abgezogen werden kann, besteht gemäß dem Ausführungsbeispiel aus Polystyrol (PS), das 7,5 Gew.% SBR enthält.

Die JP-A-55 154 262 offenbart mit Heißsiegelfolien verschlossene Behälter aus kautschukmodifiziertem Polystyrol, einem Gemisch von 50-95 Gew.% PS und 50-5 Gew.% Block-SBR. Die Heißsiegelfolie kann hierbei aus dem gleichen Material bestehen oder es können Laminate aus einem anderen Polystyrol mit Kunststoffen (PET, Nylon, PP) oder Metall (Al) als Verschlußfolien verwendet werden.

Die vorliegende Erfindung hat sich zur Aufgabe gestellt, die erwähnten Nachteile zu beseitigen und sicherzustellen, daß der Verschluß eines Kunststoffbehälters einfach herzustellen ist, die erforderliche Festigkeit aufweist, um den Beanspruchungen insbesondere während des Transportes standzuhalten, dünn gehalten werden kann, damit der Siegelungsvorgang rasch und mit einer gegenüber den bekannten Folien geringeren Temperatur vorgenommen werden kann und daher ein Ankleben am Siegelwerkzeug vermieden wird, und auch leicht vom Behälter abziehbar ist, ohne beim Abziehen zum Einreißen zu neigen. Zur Lösung dieser Aufgabe schlägt die Erfindung die Verwendung einer Kunststoffolie gemäß Anspruch 1 vor.

Zur Herstellung der biaxialen Orientierung wird die vorzugsweise im Extrusionsverfahren hergestellte schlagfeste Polystyrolfolie in zwei Richtungen gestreckt, wodurch die wirre Anordnung der fadenförmigen Polystyrolmoleküle ausgerichtet und damit die Schlagfähigkeit und Steifigkeit der Folie gegenüber einer nicht biaxial orientierten Folie wesentlich verbessert wird. Eine solche Folie kann daher dünn gehalten werden, wobei trotzdem die erforderliche Festigkeit gewährleistet ist, und es kann daher beim Siegelungsvorgang mit geringeren Temperaturen das Auslangen gefunden werden, bei welchen keine besonderen Vorkehrungen getroffen werden müssen, um ein Ankleben der Folie am Siegelwerkzeug zu vermeiden. Durch die biaxiale Orientierung bleibt die Folienfestigkeit auch im durch Kerben geschwächten Siegelbereich in ausreichendem Maß erhalten, so daß beim Abziehen der Folie vom Behälterrand trotz der hiefür notwendigen Zugspannung die Folie nicht einreißt und somit in einem Stück abgezogen werden kann.

Zweckmäßig ist die Verwendung eines Materiales nach Anspruch 2. Durch die feinverteilte lamellenartige Struktur der Butadienphase des Styrol-Butadien-Blockcopolymers wird eine schon bei niederen Temperaturen siegelnde Komponente gebildet, die sich dann beim Abziehen des Deckels lösen läßt, wenn die Folie durch eine biaxiale Orientierung entsprechend verfestigt wurde.

Als Rohstoff für die Herstellung der biaxial orientierten Folie hat sich z.B. ein hochschlagfestes Polystyrol mit 8% Butadienanteil, das eine VICAT-Zahl von 95°C (DIN 53460 Verfahren A) und einen Meltindex von 3 g/10 min (nach DIN 53735, 200°C/49N) aufweist, als gut geeignet erwiesen, das mit ca. 15% eines Styrol-Butadien-Zwei-Block-Copolymeren abgemischt wurde.

Die optimale Foliendicke liegt zwischen 0,08 mm und 0,06 mm.

Die Siegelkopftemperatur beträgt zweckmäßig zwischen 150°C und 170°C, der spezifische Siegeldruck zwischen 4 und 50 bar.

Die erfindungsgemäße Folie löst sich in der Regel einwandfrei von einem mit PTFE beschichteten Siegelwerkzeug. Es tritt aber auch bei Verwendung von nicht beschichteten Siegelwerkzeugen aus Stahl oder Bronze bei Einhaltung der erwähnten Temperaturen nur eine geringfügige, nicht störende Haftung auf. Da die Folie in der Regel nach dem Offset- oder Flexodruckverfahren ohne weitere Vorbehandlung bedruckt wird, ist die Verwendung eines Hitzeschutzlackes zum Schutz der Farben im Siegelbereich vorteilhaft. Durch den Überlack, der in der Regel in einem Maschinenlauf gemeinsam mit dem Druck aufgetragen wird, wird gleichfalls ein Ablösen auch von einem unbeschichteten Siegelwerkzeug begünstigt.

Die erfindungsgemäße Deckelfolie sieglt auch gegen A-PET und PVC.

Im folgenden werden die bei drei Siegelversuchen mit genarbten Platinen aus einer erfindungsgemäßen Folie mit einer Folienausgangsdicke von 80 µm, einem Platinendurchmesser von 65 mm und einem Siegelsteg von 3 mm ermittelten Werte bekanntgegeben.

| | | | |
|---|---|---|---|
| Siegelkraft | 1961N | 1961N | 1961N |
| Siegeltemperatur | 160°C | 165°C | 170°C |
| Siegelzeit | 0,70 s | 0,70 s | 0,70 s |
| Peelbarkeit | 5 | 5 | 5 |
| (100 % Note 5 | | | |
| 0 % Note 0) | | | |
| Berstdruck | 344 | 374 | 358 |
| | 334 | 365 | 371 |
| (minimal 300 mbar) | 350 | 347 | 354 |
| | 356 | 386 | 323 |
| | 323 | 360 | 368 |
| Mittelwert | 341 | 366 | 355 |
| Öffnungskraft | 3,84 | 9,47 | 9,24 |
| | 7,46 | 7,34 | 8,81 |
| (minimal: 3N | 6,88 | 9,31 | 8,60 |
| maximal 10N) | 8,97 | 3,17 | 8,15 |
| | 7,52 | 9,31 | 4,11 |
| Mittelwert | 6,93 | 7,72 | 7,78 |

## Patentansprüche

1. Verwendung eines aus schlagfestem Polystyrol, abgemischt mit einem Styrol-Butadien-Zwei-Block-Copolymeren bestehenden Materials als aus einer einzigen Schicht gebildete, ablösbare, heißsiegelfähige biaxial orientierte Kunststoffolie für den Abschluß von Behältern, beispielsweise Bechern, aus Kunststoff.

2. Verwendung eines Materials nach Anspruch 1, das aus 20 Gew.-% bis 98 Gew.-% schlagfestem Polystyrol und aus 2 Gew.-% bis 80 Gew.-% Styrol-Butadien-Zwei-Blockcopolymeren besteht.

## Claims

1. Use of a material consisting of impact-resistant polystyrene mixed up with a styrene-butadiene-biblock-copolymer as a detachable, heat-sealing, biaxially oriented plastic sheet formed from only one layer for the closing of containers, e.g. cups, of plastic-material.

2. Use of a material according to claim 1, said material consisting of 20 percent of weight to 80 percent of weight of impact-resistant polystyrene and of 2 percent of weight to 80 percent of weight of styrene-butadiene-biblock-copolymer.

## Revendications

1. Utilisation d'un matériau composé de polystyrène résistant aux chocs, mélangé à un copolymère en deux blocs de styrène-butadiène, comme feuille plastique monocouche détachable thermosoudable à orientation biaxiale, servant à la fermeture de récipients en plastique, par exemple de pots.

2. Utilisation d'un matériau selon la revendication 1, constitué de 20 à 98 % en poids de polystyrène résistant aux chocs et de 2 à 80 % en poids d'un copolymère en deux blocs de styrène-butadiène.
